# EUROPEAN PATENT APPLICATION

(11) **EP 2 942 279 A1**
(43) Date of publication of application: **11.11.2015**
(21) Application number: 14275102.3
(22) Date of filing: 07.05.2014
(51) Int. Cl.: B64D 37/06, B64D 37/32, B60K 15/03, F41H 5/04

(54) **Wall of a tank or container for containing a fluid**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Disclosed is at least part of a wall of a tank (16) (for example, a fuel tank of an aircraft) for containing a fluid, the at least part of the wall comprising a plurality of elements (22), each element (22) having a hardness value of 2GPa or above, and a binder material (20) in which the plurality of elements (22) are embedded. The elements (22) have a higher hardness value than the binder material (20). The elements (22) may be made of, for example, ceramic or metal. The at least part of a wall of a tank (16) may be a liner (18) for the tank (16) which is configured to be applied to an internal surface of the tank (16).

## Description

### FIELD OF THE INVENTION

The present invention relates to walls of tanks or containers for containing a fluid.

### BACKGROUND

A high speed projectile on impact with and penetration into a liquid containing tank generates very high pressure in the liquid. This phenomenon, known as hydrodynamic ram, typically includes the generation of shock waves and subsequent pressure pulses in the liquid. These pressures, combined with the penetration damage from the projectile, can cause damage to the tank structure and frequently are the cause of catastrophic failure of the tank. The hydrodynamic ram pressure pulses are intense but of short duration which propagate through the liquid in the tank.

There is thus a need for means for reducing hydrodynamic ram pressure in the liquid in such a tank and for a generally improved tank which has an improved ability to sustain projectile impact without catastrophic failure.

### SUMMARY OF THE INVENTION

In a first aspect, the present invention provides at least part of a wall of a tank for containing a fluid, the at least part of the wall comprising a plurality of elements, each element having a hardness value of 2GPa or above, and a binder material in which the plurality of elements are embedded. The elements have a higher hardness value than the binder material.

Each element may have a hardness value of 5GPa or above. Each element may have a hardness value of 10GPa or above. Each element may have a hardness value of 15GPa or above. Each element may have a hardness value of 20GPa or above.

The elements may be arranged in the binder material such that, when the at least part of the wall of the tank is impacted by a projectile having sufficient kinetic energy for at least part of the projectile to fully penetrate the at least part of the wall, the projectile impacts with at least one of the elements.

The elements may be made of ceramic, metal, or a metal alloy.

The elements may be substantially spherical in shape.

A diameter of each of the elements may be in the range 2mm to 6mm The binder material may be a rubber or a polymer. For example, the binder material may be a polymer matrix in which is also embedded a fibre-based such as carbon fibres. Thus, the at least part of a wall may be a carbon fibre composite (CFC) panel (e.g. an outer skin of an aircraft), in which is embedded the relatively hard elements.

The at least part of a wall of a tank may be a liner for a tank which is configured to be applied to an internal surface of a tank.

In a further aspect, the present invention provides a tank for containing a liquid, wherein at least part of a wall of the tank is in accordance with the preceding aspect.

The at least part of the tank wall may be a liner for the tank which is applied to an internal surface of the tank. The total cavity volume of the tank liner in the tank may be less than or equal to 15% by volume of the tank volume.

The tank may be an aircraft fuel tank.

In a further aspect, the present invention provides a vehicle (e.g. an aircraft) comprising a tank for containing a liquid in accordance with the preceding aspect.

### BRIEF DESCRIPTION OF THE DRAWINGS

Figure 1 is a schematic illustration (not to scale) of an exploded view of an example aircraft wing in which an embodiment of a fuel tank liner is implemented;
Figure 2 is a schematic illustration (not to scale) showing a cross section through a fuel tank located in the aircraft wing; and
Figure 3 is a schematic illustration (not to scale) illustrating effects of a projectile impacting with an external surface of the fuel tank.

### DETAILED DESCRIPTION

In the following description, like reference numerals refer to like elements.

The following description is based on embodiments of the invention and should not be taken as limiting the invention with regard to alternative embodiments that are not explicitly described herein. Structural material types and methods of construction identified are examples only.

It will be appreciated that relative terms such as top and bottom, upper and lower, and so on, are used merely for ease of reference to the Figures, and these terms are not limiting as such, and any two differing directions or positions and so on may be implemented.

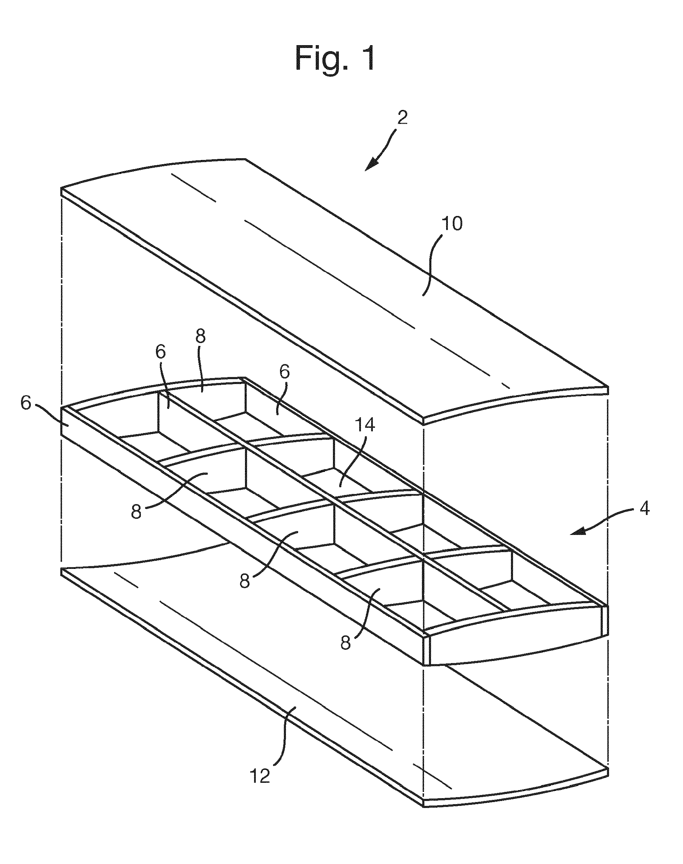

Figure 1 is a schematic illustration (not to scale) of an exploded view of an example aircraft wing 2 in which an embodiment of a fuel tank liner is implemented.

The aircraft wing 2 comprises a substructure 4 comprising a plurality of spars 6 and ribs 8. The spars 6 are spaced apart from one another and are aligned along the length of the aircraft wing 2. The spars 6 are coupled together by the spaced apart ribs 8 which are substantially perpendicular to the spars 6. The spars 6 and ribs 8 are connected together by fasteners (not shown in the Figures). The spars 6 and ribs 8 are made of carbon fibre composite (CFC) material, i.e. a composite material comprising a polymer matrix reinforced with carbon fibres. In other examples, the spars 6 and ribs 8 are made of a different appropriate material, for example, aluminium.

The aircraft wing 2 further comprises external skins, namely an upper skin 10 and a lower skin 12. The upper skin 10 comprises a plurality of panels made of CFC material. The upper skin 10 is attached to an upper surface of the substructure 4 by fasteners (not shown in the Figures). The lower skin 12 comprises a plurality of panels made of CFC material. The lower skin 12 is attached to a lower surface of the substructure 4 by fasteners (not shown in the Figures). The external skin 10, 12 may each be, for example, 8mm thick.

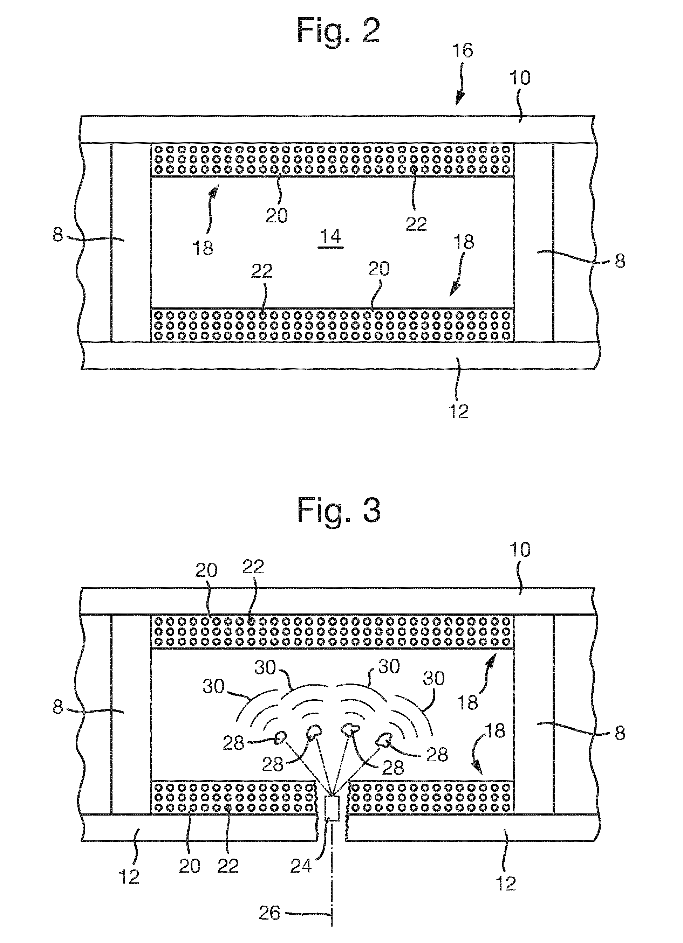

When the substructure 4 and the external skins 10, 12 are attached together (and, for example, bonded with a sealant), a cavity defined by the substructure 4 and skins 10, 12 is formed. Such a cavity is used as a fuel tank for storing aircraft fuel and is indicated in Figure 1 by the reference numeral 14. The fuel tank is described in more detail later below with reference to Figure 2.

The aircraft wing 2 further comprises a leading edge structure, a trailing edge structure and a wing tip structure, which are not shown in Figure 1 for reasons of clarity.

Figure 2 is a schematic illustration (not to scale) showing a cross section through the fuel tank 16 in the aircraft wing 2.

In this embodiment, the outer walls of the fuel tank 16 are provided by spars 6, ribs 8, and the upper and lower skins 10, 12. Aircraft fuel is stored in the cavity 14 defined by the fuel tank outer walls.

In this embodiment, the fuel tank 16 comprises two fuel tank liners 18. A first of the fuel tank liners 18 is disposed on an internal surface of the upper skin 10, i.e. the surface of the upper skin 10 that is inside the fuel tank 16. A second of the fuel tank liners 18 is disposed on an internal surface of the lower skin 12, i.e. the surface of the lower skin 12 that is inside the fuel tank 16.

Preferably, the fuel tank liners 18 cover the entirety of the internal surfaces of the external skins 10, 12 that define the fuel tank 16. Further, the fuel tank liners 18 may also cover the surfaces of the ribs 8 or spars 6.

In this embodiment, each fuel tank liner 18 is a layer of composite material that comprises a binder matrix 20 in which is embedded a plurality of objects 22.

The binder matrix 20 may be any appropriate material that may be used to bind together or retain the objects 22. For example, the binder material 20 may be rubber or a polymer. Alternatively, the objects 22 may be included 9i.e. embedded) directly within the composite layup of the tank structure, for example, within the skins 10, 12.

In this embodiment, the objects 22 are substantially spherical in shape, each having a diameter of approximately 2mm to 6mm. However, in other embodiments, one or more of the objects 22 may have a different shape and/or size, for example, an object 22 may be rod-shaped (i.e. elongate) or a cube (e.g. a rounded cube). In this embodiment, the objects 22 are harder and/or denser than the binder matrix 18. In this embodiment, the objects 22 are harder and/or denser than the CFC material that forms the external skins 10, 12. In this embodiment, the objects 22 are made of ceramic, e.g. zirconia, silicon nitride, alumina, or silicon carbide. Preferably the objects 22 have a hardness value (e.g. a Vickers hardness or a Knoop hardness) of 2GPa or above. More preferably the objects 22 have a hardness value (e.g. a Vickers hardness or a Knoop hardness) of 5GPa or above. More preferably the objects 22 have a hardness value (e.g. a Vickers hardness or a Knoop hardness) of 10GPa or above, for example the objects 22 may be made of Zirconias and Aluminium Nitrides having a Knoop hardness in the range of 10GPa to 14GPa. More preferably the objects 22 have a hardness value (e.g. a Vickers hardness or a Knoop hardness) of 15GPa or above, for example the objects 22 may be made of Aluminas and Silicon Nitrides which typically have a Vickers hardness of 15GPa to 20GPa. More preferably the objects 22 have a hardness value (e.g. a Vickers hardness or a Knoop hardness) of 20GPa or above, for example the objects 22 may be made of a carbide having a Knoop hardness of over 20GPa, e.g. Silicon Carbides and Boron Carbides which typically have a Vickers hardness of about 20GPa to 30GPa.

In this embodiment, the concentration and arrangement of the objects 22 within the fuel tank liners 18 are such that a projectile passing through the thickness of a fuel tank liner 18 will tend to impact with at least one of the objects 22, and preferably multiple objects 22. In some embodiments, the objects 22 are arranged in the binder matrix 20 in layers e.g. between 3 and 5 layers. More preferably there are more than 5 layers of objects 22. The objects 22 within a fuel tank liner 18 may be more closely packed together closer to the external skin 10, 12 to which that fuel tank liner 18 is attached.

Each fuel tank liner 18 may be any appropriate thickness e.g. 10mm to 20mm, or 15mm to 19mm. Preferably, the thicknesses of the fuel tank liners 18 are such that the fuel tank liners 18 occupy less than or equal to 15% (e.g. approximately 10%) of the fuel tank capacity. In other embodiments, the fuel tank liners 18 are a different thickness that provides that the fuel tank liners 18 occupy a different proportion of the fuel tank capacity. Preferably, the fuel tank liners 18 are of uniform thickness.

The fuel tank liners 18 may be attached to the externals skins 10, 12 by any appropriate means for example using an adhesive or by performing a bonding process.

As will now be described in more detail, the fuel tank liners 18 are operable to reduce hydrodynamic ram pressure in the fuel contained within the fuel tank 16 resulting from impact of a projectile with an external surface of the fuel tank 16.

Figure 3 is a schematic illustration (not to scale) illustrating effects of a projectile 24 impacting with the lower skin 12 of the fuel tank 16. The path of the projectile through the lower skin 12 is indicated in Figure 3 by the reference numeral 26.

The projectile 24 may be any appropriate projectile or foreign object such as a bullet, warhead fragment, a vehicle part, a rock, a maintenance tool, hail, ice, a bolt, etc. An example projectile has a weight of approximately 3.5g, is substantially spherical in shape having a diameter of approximately 9.5mm, and travels with a velocity of 1500m/s. A further example projectile is a 44g 12.5mm bullet that travels with a velocity of 500m/s.

In this example, the projectile 24 initially impacts with an external surface of the lower skin 12 and travels through the lower skin 12. The projectile 24 causes high strain rate shear damage to the lower skin 12 resulting in a hole in the lower skin 12 approximately the size of the projectile 24.

After passing through the lower skin 12, the projectile 24 impacts with the fuel tank liner 18 disposed on the lower skin 12.

The projectile 24 impacting with one or more of the objects 22 in the fuel tank liner 18 tends to retard the passage of the projectile 24 into the fuel tank 16. Impact kinetic energy of the projectile 24 tends to be absorbed at least to some extent by the fuel tank liner 18 and also transferred to the objects 22 which may be ejected into the fluid volume.

Also, projectile 24 impacting with one or more of the objects 22 in the fuel tank liner 18 may cause the projectile 24 to break up, or fragment, or be eroded into smaller parts prior to it entering the cavity 14. To facilitate this, preferably the objects 22 are harder and/or denser than the projectile 24. In some embodiments, the size of the objects 22, the hardness size of the objects 22, the density size of the objects 22, the concentration size of the objects 22 within the binder matrix 20, and or any other attribute of the objects 22 and/or binder matrix 20 may be determined (e.g. by experimentation or modelling) so as to maximise the likelihood of fragmentation of the projectile 24. The impact of the projectile 24 with objects 22 in the fuel tank liner 18 may also cause fragmentation of a portion of the fuel tank liner 18 disposed on the lower skin 12. The fragments into which the projectile 24 is broken up, and the fragments of the fuel tank liner 18, are hereinafter collectively referred to as "fragments" and are indicated in Figure 3 by the reference numerals 28. Thus, impact energy of the projectile 24 is absorbed at least to some extent by the fuel tank liner 18 disposed on the lower skin in the fragmentation of the projectile and/or the fuel tank liner 18.

Impact with one or more of the objects 22 may cause the projectile 24 to have increased tumble when travelling through the fluid.

In this example, on impact of the fragments 28 with the fuel, the fragments tend to generate respective high pressure shock waves 30. Each of these shock waves 30 tend to be of significantly lower energy than a shock wave or shock waves that would have been generated if the projectile 24 had not fragmented. Thus, pressures resulting from the shock waves 30 exerted on the walls of the fuel tank 16 tend to be lower than the shock wave pressures that would have been exerted on the walls of the fuel tank 16 if the projectile 24 had not fragmented. Thus, the likelihood of damage to the walls of the fuels tank 16 (e.g. decoupling of the external skin 10, 12 from the spars 6 or ribs 8 tends to be reduced.

In this example, as a fragment 28 passes through the fuel, a cavitation "wake" may form behind that fragment 28, i.e. a region of low pressure (e.g. a vapour or a vacuum) may form in the wake of a fragment 28. This causes a fluid displacement and an increase in the pressure of the fluid in the fuel tank 16. The increased fuel pressure resulting from cavitation caused by the fragments 28 tends to be significantly lower than the pressure increase that would have been caused by cavitation if the projectile 24 had not fragmented. Thus, pressures resulting from cavitation exerted on the walls of the fuel tank 16 when the projectile 24 is fragmented tend to be lower than the pressures that would have been exerted on the walls of the fuel tank 16 if the projectile 24 had not been fragmented. Thus, the likelihood of damage to the walls of the fuels tank 16 (e.g. decoupling of the external skin 10, 12 from the spars 6 or ribs 8 tends to be reduced.

In this example, when travelling through the fuel, the fragments 28 tend to experience a greater overall drag force compared to that that would be experienced by the projectile 24 if the projectile 24 had not fragmented. This tends to be at least in part due to the increased surface area of the fragments 28 compared to the non-fragmented projectile 24. Thus, the passage of the projectile/fragments through the fluid in the fuel tank 16 tends to be retarded. The retardation of the passage of the projectile/fragments through the fluid tends to decrease the likelihood of the projectile/fragments impacting with the upper skin 10. Thus, the likelihood of a hole being formed in the upper skin tends to be reduced. Furthermore, the increase in drag on the projectile/fragments tends to mean that a greater portion of the impact energy is absorbed by the fluid in the fuel tank 16. Thus, forces exerted on the walls of the fuel tank 16 tend to be reduced.

Additionally, in this example, the fuel tank liner 18 disposed on the upper skin 10 is located within the fuel tank 16 such that the shock waves 30 resulting from compression of the fuel in the fuel tank 16 resulting from impact of the projectile 24 with the lower skin 12 impinge on the fuel tank liner 18 disposed on the upper skin 10 and so that the shock waves 30 interact with the fuel tank liner 18 disposed on the upper skin 10 before impinging on the upper skin 10. The fuel tank liner 18 disposed on the upper skin 10 tends to reflect incident shock waves 30 at least to some extent. Also, the fuel tank liner 18 disposed on the upper skin 10 tends to be a relatively poor transmitter of impinging shock waves 30. Thus, the amplitude of the shock waves 30 impinging upon the upper skin 10 tends to be reduced and consequently the pressure experienced by the upper skin 10 tends to be diminished by the presence of the fuel tank liner 18 disposed on the upper skin 10. The fuel tank liners 18 advantageously tend to decouple the fuel from walls of the fuel tank 16.

Furthermore, were any of the fragments 28 (or even the non-fragmented projectile 24) to continue through the cavity 14 and impact with the fuel tank liner 18 disposed on the upper skin 10, the fuel tank liner 18 disposed on the upper skin 10 would tend to cause further break-up or fragmentation of the impinging fragment 28 (or the non-fragmented projectile 24), thereby further reducing impact energy and reducing force experienced by at least the upper skin 10.

An advantage provided by the above described fuel tank liner is that hydrodynamic ram damage to a fuel tank caused by an object impacting with an external surface of the fuel tank tends to be reduced or eliminated. Hydrodynamic pressures and their associated structural responses tend to be reduced or eliminated. Thus, the likelihood of catastrophic failure of the fuel tank and corresponding aircraft loss tends to be reduced or eliminated.

The above described fuel tank liner advantageously tends to be relative easy and cheap to manufacture.

The above described fuel tank liner tends to be relatively easy to retrofit to existing aircraft fuel tanks.

The above described fuel tank liner tends to provide protection against hydrodynamic ram damage whilst occupying a relatively small amount of the fuel tank's capacity.

In the above embodiments, the fuel tank liners are used to line the surfaces of an aircraft wing fuel tank. However, in other embodiments, the fuel tank liners are a different type of liner and may be used to line an internal or external surface of a different type of container for containing fluid. In some embodiments, one or more walls of the container may be made of a different material to that described above.

In the above embodiments, fuel tank liners are disposed on the internal surfaces of the upper and lower aircraft skins. However, in other embodiments a fuel tank liner may be disposed on a different surface of the fuel tank instead of or in addition one or both of the internal surfaces of the upper and lower aircraft skins. For example, in some embodiments, all internal surfaces of the fuel tank are covered by fuel tank liners. In some embodiments, a fuel tank liner is only disposed on a single surface of the fuel tank, for example, on only the internal surfaces of the lower aircraft skin.

In the above embodiments, the fuel tank liners include objects embedded in the binder material. These objects are substantially spherical in shape, are made of ceramic, and have a diameter of 4mm to 5mm. However, in other embodiments, one or more of the objects may be a different shape, e.g. an irregular shape. In other embodiments, one or more of the objects may be made of a different appropriate material, e.g. metal or alloy such as hardened steel, for example the objects may be made of stainless steel which typically has a Vickers hardness of about 5GPa or cemented carbide which typically has a Vickers hardness of above 15GPa. Also, in other embodiments one or more of the objects may have a different size, for example, in some embodiments, some or all of the objects are larger than 5mm in diameter. Similarly, in other embodiments, some or all of the objects are smaller than 4mm in diameter. Preferably, the objects have diameters between 3mm and 5mm.

In the above embodiments, the liner material is a layer of material which may be applied to an internal surface of the fuel tank. However, in other embodiments, the fuel tank liner may be integral to one or more of the walls of the fuel tank. For example, in some embodiment, the objects may be directly embedded in one or more of the walls of the fuel tank. For example, in some embodiment, the objects are embedded in the portion of the lower skin that forms a wall of the fuel tank, i.e. the objects are directly embedded in the CFC material that forms the lower skin.

## Claims

1. At least part of a wall of a tank (16) for containing a fluid, the at least part of the wall comprising:
a plurality of elements (22), each element (22) having a hardness value of 2GPa or above; and
a binder material (20) in which the plurality of elements (22) are embedded; wherein
the elements (22) have a higher hardness value than the binder material (20).

2. At least part of a wall of a tank (16) for containing a fluid according to claim 1, wherein each element (22) has a hardness value of 5GPa or above.

3. At least part of a wall of a tank (16) for containing a fluid according to claim 2, wherein each element (22) has a hardness value of 10GPa or above.

4. At least part of a wall of a tank (16) for containing a fluid according to claim 3, wherein each element (22) has a hardness value of 15GPa or above.

5. At least part of a wall of a tank (16) for containing a fluid according to claim 4, wherein each element (22) has a hardness value of 20GPa or above.

6. At least part of a wall of a tank (16) for containing a fluid according to any of claims 1 to 5, wherein the elements (22) are arranged in the binder material (20) such that, when the at least part of the wall of the tank (16) is impacted by a projectile (24) having sufficient kinetic energy for at least part of the projectile (24) to fully penetrate the at least part of the wall, the projectile (24) impacts with at least one of the elements (22).

7. At least part of a wall of a tank (16) for containing a fluid according to any of claims 1 to 6., wherein the elements (22) are made of ceramic, metal, or a metal alloy.

8. At least part of a wall of a tank (16) for containing a fluid according to any of claims 1 to 7, wherein the elements (22) are substantially spherical in shape.

9. At least part of a wall of a tank (16) for containing a fluid according to any of claims 1 to 8, wherein a diameter of each of the elements (22) is in the range 2mm to 6mm

10. At least part of a wall of a tank (16) for containing a fluid according to any of claims 1 to 9, wherein the binder material (20) is a rubber or a polymer.

11. At least part of a wall of a tank (16) for containing a fluid according to any of claims 1 to 10, wherein the at least part of a wall of a tank (16) is a liner (18) for the tank (16) which is configured to be applied to an internal surface of the tank (16).

12. A tank (16) for containing a liquid, wherein at least part of a wall of the tank (16) is in accordance with any of claims 1 to 11.

13. A tank (16) according to claim 12, wherein:
the at least part of the tank wall is a liner (18) for the tank which is applied to an internal surface of the tank (16); and
the total cavity volume of the tank liner (18) in the tank (16) is less than or equal to 15% by volume of the tank volume.

14. A tank (16) according to claim 12 or 13, wherein the tank (16) is an aircraft fuel tank.

15. A vehicle comprising a tank (16) for containing a liquid in accordance with any of claims 12 to 14.
